# EUROPEAN PATENT APPLICATION

(11) **EP 0 617 535 A2**
(43) Date of publication of application: **28.09.1994**
(21) Application number: 94301872.1
(22) Date of filing: 16.03.1994
(51) Int. Cl.: H04M 1/60, B60R 11/02

(54) **Mounting assembly for a radio telephone**

(30) Priority: 25.03.1993 GB 9306248
(71) Applicant: NOKIA MOBILE PHONES LTD., SF-24101 Salo (FI)
(72) Inventor: Korhonen, Pertti, SF-90550 Oulu (FI); Niemi, Pekka, SF-24100 Salo (FI); Lahti, Lassi, SF-24260 Salo (FI); Vilmi, Toivo, SF-90830 Haukipudas (FI)
(74) Representative: Frain, Timothy John

(57) **Abstract**

A mounting assembly for a radio telephone handset has a body portion (1) and a loudspeaker (10) mounted therein for use in "hands-free" mode. A holder (2) is provided for securely but releasably holding the handset and said holder is detachably mounted on the body portion. The said body portion includes a recess adapted to receive and secure a portion of the holder.

The handset may be indirectly securably attached to the body portion or, using the same holder, it may be mounted elsewhere.

## Description

The present invention relates to a mounting assembly for a radio telephone.

The usefulness of a radio telephone such as a portable or mobile cellular telephone may be enhanced by the use of a handsfree mode which enables the user to operate the telephone while performing another task.

Mounting assemblies which facilitate handsfree operation are particularly useful in vehicles where the arrangement enables a driver to carry on a telephone conversation while allowing both hands to be used to control the vehicle.

When a call is received or transmitted, with the radio telephone handset mounted in the handsfree arrangement holder, the handsfree arrangement loudspeaker and microphone operate in place of the telephone loudspeaker (earpiece) and microphone (mouthpiece). The telephone handset is arranged to sense the presence of the holder and automatically switches from telephone handset mode, in which the handset loudspeaker and microphone operate, to a handsfree mode, in which the handsfree arrangement loudspeaker and microphone operate. When the telephone handset does not sense the presence of the holder, i.e. when the handset has been removed from the holder by a user, the telephone handset automatically switches from handsfree mode to telephone mode.

Two types of handsfree arrangement are known. A first type comprises a distinct microphone and a one-piece housing having a loudspeaker and a telephone holder for a telephone handset. This type of handsfree arrangement may be used as the cradle for a handset of a mobile telephone intended for installation in a vehicle. The handsfree arrangement may also comprise a connector for an external antenna and a connector for a microphone.

A second type of handsfree arrangement comprises a body arranged to have a loudspeaker and a separate holder for a telephone handset. The body and the holder are physically separate and therefore require more surface space in the vehicle interior. This type of handsfree arrangement is also more difficult to install due to the additional number of separate parts.

The choice between a one-piece handsfree arrangement or a body and holder combination may be determined by the available space in the vehicle interior as well as variable criteria such as whether or not the one-piece hands free arrangement or the components of the body and holder combination will obstruct a load to be carried by the vehicle. However, neither arrangement provides any flexibility when the variable criteria may change and one or other arrangement becomes preferable.

A one-piece arrangement is known wherein the holder or cradle for the telephone is manufactured as a separate piece and secured to the body prior to use. However the holder in this arrangement is not intended to be used separate from the body.

A problem with the use of a handsfree arrangement in a confined space such as the interior of a vehicle is the lack of suitable mounting positions in which the telephone handset is accessible and the handsfree arrangement and telephone handset combination is not obtrusive.

The present invention provides a handsfree arrangement comprising a body, and a holder for a telephone handset, wherein the holder is detachably mountable on said body, the body comprising a recess adapted to receive a complementary shaped first portion of said holder, the holder comprising a second portion which is substantially cup shaped for receiving a telephone handset.

According to an aspect of the present invention, there is provided a mounting assembly for a radio telephone handset, comprising a body portion; a loudspeaker mounted within said body portion for use in "hands-free mode"; and a holder for securely but releasably holding the handset; wherein said holder is detachably mountable on said body portion and said body portion includes a recess adapted to receive and secure a portion of the holder.

An advantage of the present invention is the provision of an increased degree of freedom when installing and operating a handsfree unit in a confined space.

The recess and the portion of the holder may be adapted to provide a friction fit. Alternatively the recess and the portion of the holder are adapted to provide a snap fit. Either recess and portion configuration will provide secure releasable attachment of the holder on the body of the handsfree arrangement. Furthermore, the holder may be secured to the holder by the use of secure releasable attachment means such as screws.

The holder may comprise a magnet which will actuate a magnetic relay in the telephone handset so as to switch the telephone handset to handsfree operation on the insertion of the telephone handset into the holder.

Handsfree mode is intended to mean a mode in which the handsfree unit loudspeaker and microphone operate instead of the telephone handset loudspeaker and microphone.

The handsfree arrangement may include a removable cover which may be attached to the body to conceal the recess when the holder in not mounted thereon. The cover prevents the ingress of foreign matter into the recess as well as providing an enhanced eye appeal to the handsfree unit body when mounted separately from the holder. The recess and cover may also provide an additional storage facility.

Means may also be included for releasably locking the housing to the body when mounted thereon. This will ensure that the telephone may be inserted into and removed from the holder without accidentally separating the holder from the body.

In one embodiment, the handsfree arrangement body and holder each comprise means into which a removable fixing plate may be inserted.

Alternatively, the handsfree arrangement body and holder may each comprise apertures into which removable attachment straps may be inserted.

The main body and holder may be releasably mounted on a structural portion of a vehicle interior or other surface. The use of a separate fixing plate or straps to mount the holder enables the holder to be moved between the fixing plate and the main body should mounting requirements change, for example if the holder is inconveniently positioned when the vehicle is being used to carry a load.

The main body may also include electrical connectors for devices such as an answering machine or a fax, or a portable computer.

Embodiments of the present invention are described herein, by way of example, with reference to the accompanying drawings in which:
Figure 1 is a perspective view of component parts of a mobile telephone mounting assembly for hands-free use (a hands-free arrangement) having a holder and a body portion.
Figure 2 is a perspective view of the holder shown in Figure 1, with a radio telephone mounted therein;
Figure 3 is a perspective view of an alternative embodiment of a mounting assembly;
Figure 4 is a schematic view of another embodiment, mounted in a vehicle interior.

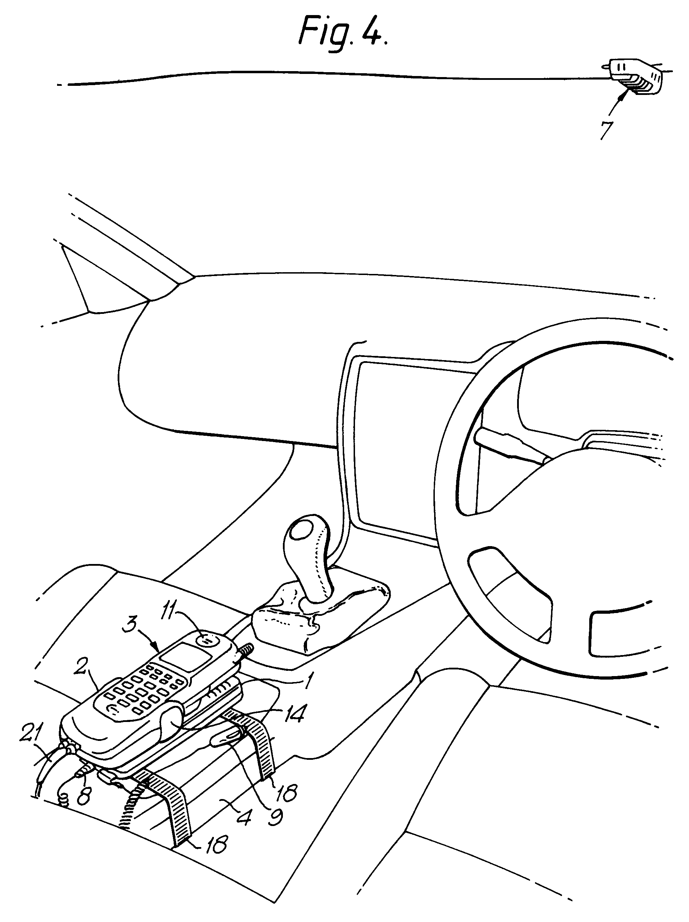

In each of the embodiments, a body 1 is mountable on a surface, such as a structural portion 4 of a vehicle interior, as illustrated in Figure 4. A holder 2 is adapted to be mountable both on a surface, such as a structural portion 4 of a vehicle interior and on the main body 1 portion 1.

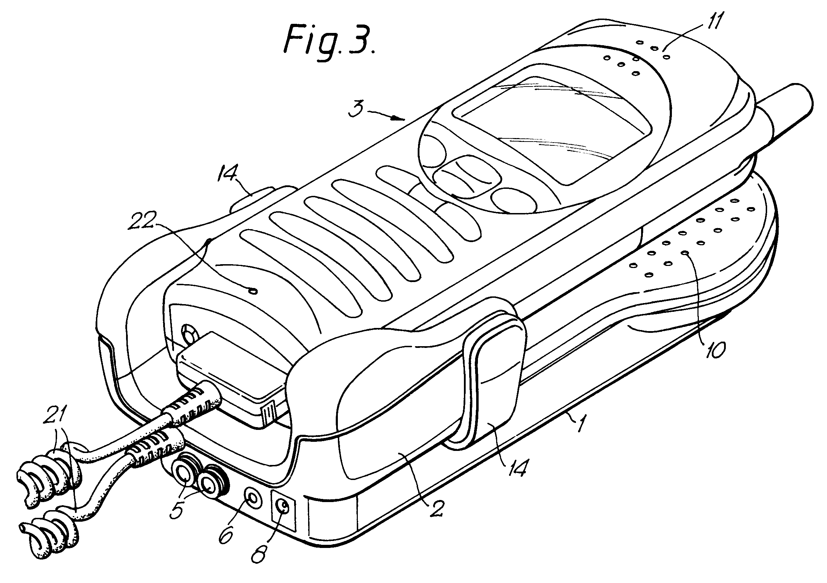

As illustrated in Figure 3 the body 1 comprises a housing having a connector 5 for one or two external antennas (not shown) which will be mounted on the exterior of the vehicle, a connector 6 for an external microphone 7 (Figure 4) and a connector 8 for electrical connection to an external power supply (not shown). The electrical power supply is generally the vehicle battery. The body 1 is coupled to the vehicle battery via a connector 9 configured to be connected to the vehicle cigar lighter.

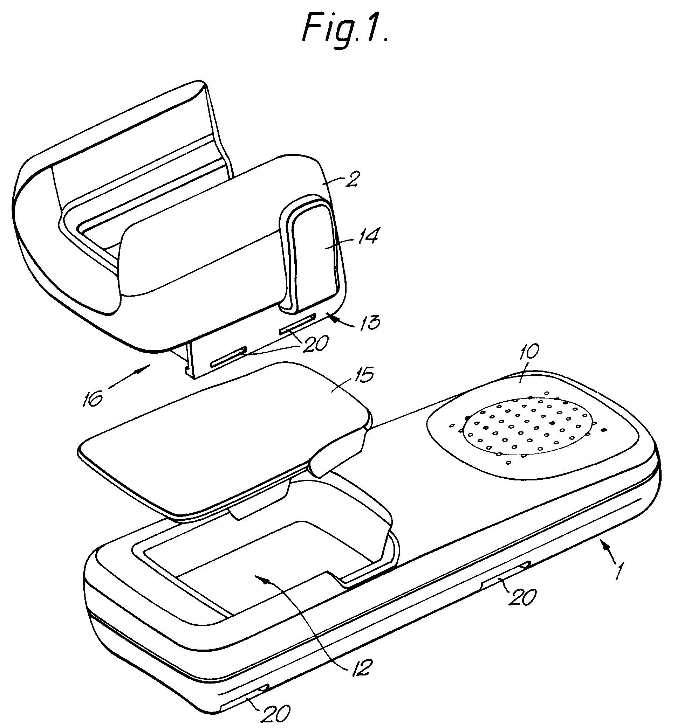

The body 1 also comprises a loudspeaker, located behind the loudspeaker grille 10, which is operable in place of the telephone loudspeaker (earpiece) 11 when the telephone handset 3 is mounted in the handsfree unit holder 2. The exact shape of the housing may differ to enable the use of different loudspeakers as illustrated in Figures 1 and 3.

As illustrated in Figure 1 the body 1 comprises a recess 12 adapted to receive a portion 13 of the holder 2 when the holder 2 is mounted on the body 1. The recess 12 is substantially rectangular with rounded corners and the portion 13 of the holder 2 is correspondingly shaped to fit securely into the recess 12. The portion 16 of the holder 2 and recess 12 are formed to provide a friction fit therebetween. Alternatively, the portion 16 and recess 12 may be formed to provide a snap fit.

Releasable locking arms 14 may be included on the holder 2 to improve the locking of the telephone 3 to in the holder 2 when inserted therein. One arm 14 is pivotally mounted on either side of the holder 2, the arms 14 are formed to releasably engage the telephone 3. The arms 14 are released by exerting a force on the respective lower portions.

A removable cover 15 is provided to conceal the recess 12 when the holder 2 is not mounted on the body 1. If the body 1 is mounted substantially horizontally and the holder 2 is mounted separately, the recess 12 may provide additional storage space for small objects such as coins.

The cover 15 is formed to be releasably lockable in the recess so that the top surface of the cover lies contigious with the top surface of the housing of the main body 1. The cover 15 and recess 12 may be formed to snap fit or friction fit.

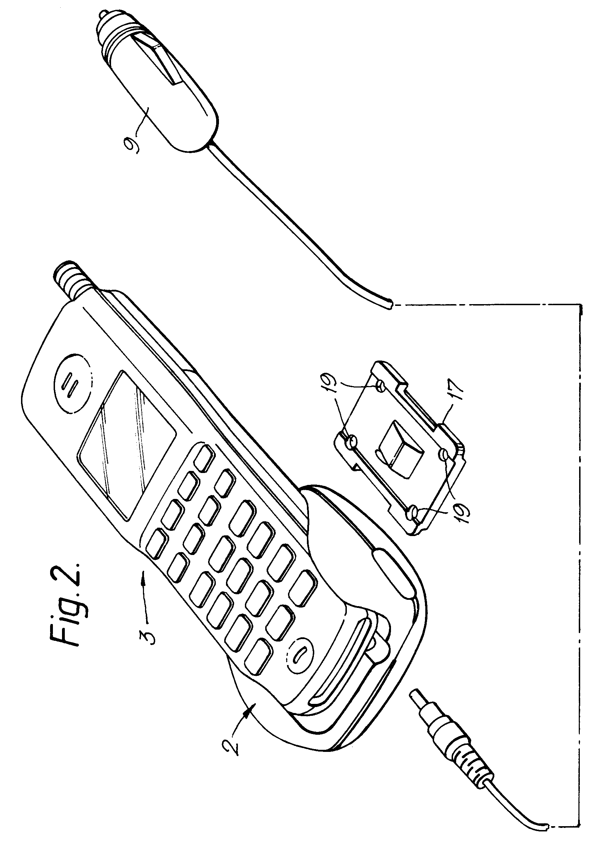

As illustrated in Figure 1, the housing 2 comprises means in the form of a recess 16, configured to enable attachment to a surface by a separate fixing plate 17 (Figure 2). The main body 1 also comprises a similar recess (not shown) configured for the same purpose.

As illustrated in Figure 4 the fixing plate 17 may be attached to the surface using attachment straps 18, such as nylon straps, or by double sided tape. The fixing plate 17 may also be provided with screw holes 19, enabling the fixing plate to be screwed to a surface. These fixing means are given as examples and other fixing means may be used to attach the fixing plate 17 to the surface.

Alternatively, the body 1 and the holder 2 may comprise apertures 20, see Figure 1, configured to enable attachment to a surface by similar attachment straps, without the need for a fixing plate. However, the fixing plate 17 provides an advantage in the positioning of the holder 2 in that it enables ease of removal of the holder 2 from its mounting position by sliding the holder 2, and recess 16, with respect to the fixing plate 17. Thus the holder 2 can be easily moved between the fixing plate 17 on a surface and the recess 12 on the body 1.

In the embodiment illustrated in Figures 1 to 3 the body 1 of the handsfree assembly is electrically coupled to the telephone handset 3 via a coil cable 21, see Figure 3. The coil cable 21 both provides power to the telephone handset 3 to recharge the telephone battery and provides an audio or RF signal path between the handsfree unit and the telephone handset 3. The antenna (not shown) which is coupled to the body 1 of handsfree unit through connector 5 provides an RF signal through the handsfree unit to the handset 3 or to the handsfree unit, for processing. If the handsfree unit is being used in connection with a mobile radio telephone the RF signal is processed and an audio signal is provided to the telephone handset via the coil cable. If the handsfree unit is being used with a portable radio telephone the RF signal may be provided, via the coil cable 21, to the telephone handset for processing.

In an alternative embodiment, see Figure 4, the body 1 of the handsfree assembly is electrically coupled to the holder 2 which is in turn electrically coupled to the telephone 3, when the telephone 3 is mounted in the holder 2. Thus in the alternative embodiment there is no electrical connection between the body 1 and the telephone 3 when the telephone 3 is not mounted in the holder 2. Therefore, the signal from the handsfree unit antenna (not shown) is not coupled to the telephone handset and the telephone handset cannot be used when removed from the holder.

When installing the handsfree unit, in a vehicle for example, the body 1 and holder 2 may be mounted separately or together in order to utilize the available space as effectively as possible.

When using the telephone handset 3 to make or receive a telephone call with the telephone handset 3 in the holder 2 the handsfree unit microphone 7 and loudspeaker are utilized in place of the telephone loudspeaker 11 and microphone 22. Should the user wish to use the telephone without the handsfree unit, say if increased privacy is required or if ambient noise makes it difficult to carry on a conversation, the removal of the telephone from the holder 2 will automatically switch the telephone handset 3 and handsfree unit from handsfree mode to telephone mode and activate the telephone loudspeaker 11 and microphone 22. Insertion of the telephone handset 3 in the holder will also automatically return the telephone and handsfree unit to handsfree mode.

In view of the foregoing, it will be clear to a person skilled in the art that modifications may be incorporated without departing from the scope of the present invention. For example, alternative fixing means may be employed for locking the portion 13 of the holder 2 in the recess 12.

## Claims

1. A mounting assembly for a radio telephone handset, comprising
a body portion (1); characterised by
a loudspeaker mounted within said body portion for use in "hands-free" mode; and
a holder (2) for securely but releasably holding the handset; wherein
said holder is detachably mountable on said body portion, wherein said body portion includes a recess (12) adapted to receive and secure a portion of the holder.

2. An assembly according to claim 1, wherein the holder is secured to the body by releasable attachment means.

3. An assembly according to claim 2, wherein the releasable attachment means include one or more screws.

4. An assembly according to claim 1, wherein the holder includes a magnet arranged to actuate a magnetic relay in the telephone handset, so as to switch said telephone handset to handsfree operation on the insertion of the telephone handset into the holder.

5. An assembly according to claim 1, including a removable cover (15) which may be attached to the body to conceal the recess when the holder is not mounted thereon.

6. An assembly according to claim 1, wherein the holder includes means for releasably locking the telephone handset to the holder.

7. An assembly according to claim 1, wherein the body and the holder each comprise means into which a removable fixing plate may be inserted.

8. An assembly according to claim 1, wherein the body and the holder each comprise apertures into which removable attachment straps may be inserted.

9. An assembly according to claim 1, wherein the body comprises means for electrical connection to a telephone handset.

10. An assembly according to claim 1, wherein the holder includes means for electrical connection to a telephone handset.

11. An assembly according to claim 1, including means for connection to an external power supply.

12. An assembly according to claim 1, including means for connection to an external handsfree microphone.

13. An assembly according to claim 1, including a handsfree microphone.

14. An assembly according to claim 1, wherein the holder comprises means for electrical connection to one or more telephone accessories.
